# EUROPÄISCHE PATENTSCHRIFT

(11) **EP 0 494 285 B1**
(45) Veröffentlichungstag und Bekanntmachung des Hinweises auf die Patenterteilung: **26.10.1994**
(21) Anmeldenummer: 91912948.6
(22) Anmeldetag: 17.07.1991
(51) Int. Cl.: F16D 1/06, F16H 53/02

(54) **VERBINDUNG EINES AUF FERTIGMASS GEFERTIGTEN ZYLINDERKÖRPERS**
ASSEMBLY OF A CYLINDRICAL BODY MADE TO FINISHED DIMENSIONS
ASSEMBLAGE D'UN CORPS CYLINDRIQUE FABRIQUE A LA COTE EXACTE

(30) Priorität: 27.07.1990 CH 2493/90
(43) Veröffentlichungstag der Anmeldung: 15.07.1992
(73) Patentinhaber: Mettler-Friedli, Karl, FL-9495 Triesen (LI)
(72) Erfinder: Mettler-Friedli, Karl, FL-9495 Triesen (LI)
(74) Vertreter: Büchel, Kurt F., Dr.
(86) Internationale Anmeldenummer: EP9101340
(87) Internationale Veröffentlichungsnummer: WO9202739

(56) Entgegenhaltungen:
- EP-A- 0 222 114
- EP-A- 0 354 869
- DE-A- 3 128 522
- DE-A- 3 232 868
- DE-A- 3 247 636
- DE-A- 3 711 489
- DE-A- 3 738 809
- DE-U- 8 426 999
- GB-A- 137 317
- GB-A- 859 327
- GB-A- 1 274 419
- GB-A- 2 157 399
- US-A- 3 603 624
- US-A- 4 513 488
- US-A- 4 523 872
- US-A- 4 767 233
- Patent Abstracts of Japan, Band 12, Nr. 444 (C-545)(3291) 22. November 1988, & JP-A- 63169351

## Beschreibung

Die Erfindung bezieht sich auf eine Verbindung nach dem Oberbegriff des Anspruches 1 und ihre Herstellung.

Die nachstehenden Ausführungen beziehen sich auf eine Nockenwelle zur Steuerung von Ventilen, wie solche bei Verbrennungs-Kraftmaschinen zum Einsatz gelangen. Die Erfindung bezieht sich jedoch nicht nur auf Nockenwellen, sondern kann auch überall dort Verwendung finden, wo sich fertigungstechnisch Kosten- und Qualitätsvorteile ergeben.

Eine Nockenwelle muss verschiedenen Anforderungen gerecht werden, sie muss eine gute Biegesteifigkeit, Torsions- und Ermüdungsfestigkeit aufweisen, aber insbesondere wird eine hohe Verschleissfestigkeit der Nockenkurve verlangt. Der Gegenpart, der mit der Nockenkurve unmittelbar in Berührung steht, ist motorenspezifisch unterschiedlich ausgelegt. Als Trieblingspartner zum Nocken stehen heute Tassenstössel, Schlepp- und Kipphebel im Einsatz, bei denen Gleitreibung auftritt, sowie Rollenstössel oder Rollenkipphebel, bei welchen eine rollende Bewegung auftritt.

Die im Triebsystem auftretenden hohen Kräfte, welche auf die Trieblingspartner einwirken, bewirken an den Berührungsflächen der Trieblingspartner unterschiedliche Flächenpressungen, was bei ungenügender Auslegung der Trieblingspartner, zu Schäden, insbesondere an deren Oberfläche (Pittingsbildung, Abrieb usw.) führen kann.

Bei Systemen, wo neben der hohen Flächenpressung auch noch vorwiegend eine Gleitschiebung zwischen den Trieblingspartnern auftritt, muss dafür gesorgt werden, dass die Gleitflächen der Nockenkurve zusätzlich eine ausreichende Verschleissschutzschicht erhalten, um einen Abrieb der Nockenkurve zu verhindern.

Die heute verwendeten Gusseisen- oder Schalenhartguss-Nockenwellen sind einstückig ausgelegt. Diese an sich bewährten Bauteile haben den Nachteil, dass bei der Herstellung vom Rohkörper bis zur einbaufertigen Nockenwelle, insbesondere bei den Operationen wie Nockenschleifen, thermische Behandlung, Richten usw. hohe Bearbeitungskosten und hohe Ausschusszahlen anfallen. Ein weiterer Nachteil ist das hohe Gewicht der als Vollwelle ausgelegten Nockenwelle. Aus preislichen und technologischen Gründen scheiden moderne Oberflächenbeschichtungsverfahren zur Verschleissreduktion aus.

Aus Patentveröffentlichungen ist bekannt geworden, dass versucht wurde, die heute einstückige Gusseisen- oder Schalenhartguss-Nockenwelle durch eine mehrstückige Stahlnockenwelle zu ersetzen. Mit dieser Ausführung sollte vor allem eine Gewichtsreduktion durch Verwendung einer Hohlwelle (Rohr) erreicht werden. Bei gewissen Konstruktionen wurden zusätzlich auch Verbilligungen der Herstellkosten erwartet.

Alle bekannten mehrstückigen Nockenwellen haben gemeinsam, dass im wesentlichen der Gussrohling der einstückigen Nockenwelle, durch einen mehrstückigen Nockenwelle-Stahlrohling ersetzt wird. Bei den Herstellkosten wird eine gewisse Einsparung bei den Zerspankosten erreicht. Die kostenintensive Fertigbearbeitung der Endposition, der Lagersitze und Nockenkurven fällt jedoch weiterhin entsprechend der bestehenden Fertigungstechnologie an. Auch hier scheiden Oberflächenbeschichtungsverfahren zur Verschleissverminderung aus technologischen Gründen (Baugrösse, selektive Flächenauswahl) aus.

Alle bekannt gewordenen Fügeverbindungen, welche die Verbindung des Nockens mit der Welle torsions- und axial-sicher machen, haben den Nachteil, dass aufgrund der gewählten Fügetechnologie der verlangte geometrische Endzustand der montierten Nockenwelle nicht ohne Nachbearbeitung erreicht wird.

Die vorveröffentlichte DE 3717534 A1 beschreibt eine gebaute Nockenwelle, bei der durch das Aufweiten der Hohlwelle von innen - wie die Praxis zeigt - ein relativ unkontrollierter Druckaufbau im Nocken erfolgt, der durch Uebertragung über die an der Welle anliegenden Stellen sich bis zur Nockenoberfläche auswirkt, wobei dort Unebenheiten, zB. Mittenabsenkungen entstehen können. Dieser gewichtige Nachteil verhindert einerseits, dass auf Fertigmass bearbeitete Nocken zur Anwendung gelangen und dass anderseits neue Fertigungs- und Oberflächenbeschichtungsverfahren angewendet werden können.

Das vorveröffentlichte Dokument GB-A-2157399 beschreibt eine gebaute Nockenwelle, bei der die dauerhafte Verbindung des Nockens mit der Welle durch Hartlöten erreicht wird. Der Nocken weist in der Mitte einen Hohlraum auf, um dort Hartlot einzubringen, bevor der Nocken auf die Welle geschoben wird. Der geringste Innendurchmesser des Nockens ist um etwa 0,2mm grösser als der grösste Aussendurchmesser der Welle, wodurch sich eine Spielpassung ergibt. Daraus ergibt sich ein Ringspalt zwischen Nocken und Welle, der nach einer Temperaturbehandlung von ca 1100°C mit geschmolzenem Hartlot gefüllt wird, um den Nocken an der Welle zu befestigen. Diese Befestigungsart ist relativ aufwendig, erfordert Hartlot, Erwärmungsvorrichtungen usw. Ausserdem können durch den Erwärmungsvorgang Schäden an vorgefertigten Lagerstellen an der Welle oder Materialerweichungen auftreten, die durch zusätzliche Massnahmen verhindert werden müssen. Nach dem Aufschieben der Nocken ist diese bekannte Nockenwelle somit keinesfalls einbaufertig.

Eine Möglichkeit, Nocken und Hohlwelle vor der Montage auf Fertigmass inklusive Verschleissschicht herzustellen, würde erlauben, die Stückkosten gegenüber den herkömmlichen Gussnockenwellen, wie auch den mehrstückig gebauten Nockenwellen erheblich zu senken.

Eine Fügeverbindung muss sicherstellen, dass neben einer sicheren Verbindung zur Kraftübertragung der auftretenden Torsions- und Axialkräfte, die auf Fertigmass gefertigten Bauteile, insbesondere Nocken und Welle keine funktionsbeeinträchtigenden Massveränderungen durch das Zusammenfügen erleiden. Ziel ist, dass die Nockenwelle einbaufertig ist.

Die Aufgabe der Erfindung ist also, eine Verbindung zu ermöglichen, welche erlaubt, die Bauteile auf Fertigmass herzustellen, für die Nocken die verschiedenstartigen Nockenwerkstoffe wie: Stahl und Leichtmetall, sowie als Verschleissschicht an der Oberfläche der Nockenkurve modernste Beschichtungsverfahren einzusetzen. Weiters soll eine optimale funktionale Auslegung insbesondere des Nockens zu seinem Trieblingspartner, z.B. Tassen- oder Rollenstössel, erlaubt sein.

Diese Aufgabe wird durch die Merkmale des Anspruches 1 erstmals in zufriedenstellender Art und Weise gelöst. Die erfindungsgemäss im Kennzeichen dieses Anspruches angeführten Merkmale bewirken, dass ein problemloses Montieren der Nocken auf der Welle möglich ist, diese dort exakt fluchtend sitzen und allfällig gewünschte weitere geeignete Befestigungsmassnahmen am Nockenrand sich kaum mehr nachteilig auf die Nocken- oder Wellengeometrie auswirken und dass unerwünschte Spannungen im Nocken und/oder in der Welle vermieden werden.

Die Zonen, welche unmittelbar die Welle berühren, weisen eine spielfreie Uebergangspassung auf, unter der man im Rahmen der Erfindung eine Passung versteht, die ohne besondere Massnahmen ein Aufschieben der Nocken gerade noch erlaubt, ohne dabei zu nennenswerten Zerstörungen an der Nockeninnenbohrung oder an der Welle zu führen und bei der nach dem Aufschieben ohne weitere besondere Fixierungsmassnahmen der Nocken so fest sitzt, dass er verdreh- und verschiebefest mit der Welle verbunden ist.

Die Bereiche zwischen den ringförmigen Zonen berühren als Freistellungen die Wellenoberfläche nicht. Das Aufschieben der Nocken wird dadurch erst beschädigungsfrei ermöglicht.

Verschiedene Ausgestaltungen, Varianten und Verfahren zur Herstellung von Teilen der Erfindung sind in den Unteransprüchen beschrieben. Die sich daraus ergebenden Vorteile und Möglichkeiten sind im folgenden beispielhaft und nicht vollständig angeführt.

Die Ausbildung gemäss Anspruch 2 bietet eine verbesserte Möglichkeit zur Befestigung bzw. zusätzlichen Verdrehsicherung der Nocken, wobei das Einbringen von unerwünschten Spannungen im Nockenkurvenbereich besonders leicht vermieden wird. Die Ausbildung gemäss Anspruch 4 ermöglicht es im Zusammenhang mit Anspruch 2 eine zusätzliche torsionale/axiale Befestigung der Nocke auf der Welle zu erreichen, indem der umlaufende vorstehende Kragen am Nocken durch Einsicken mit der Welle verbunden wird.

Die Ausbildung gemäss Anspruch 3 vermeidet mit Sicherheit Beschädigungen der Lagersitzflächen, die zwischen den erhabenen Wellenteilen liegen und vor der Montage bereits auf Fertigmass hergestellt sind.

Die Ausbildung gemäss Anspruch 5 erlaubt es besonders gut, auftretende Dehnspannungen, welche z.B. durch die spielfreie Übergangspassung auftreten, aufzunehmen.

Die Merkmale des Anspruches 7 verbessern dabei die Kooperationseigenschaften der Nocken mit Trieblingspartnern, erhöhen die Standzeiten und reduzieren Reibung.

Bei den verschiedenen Härtvorgängen wird dabei mit Vorzug der Kragen und gegebenenfalls die Nockenseitenwand abgedeckt.

Dadurch, dass die Nocken erfindungsgemäss einzeln auf Fertigmass herstellbar sind, sind für die Gleit- respektive Verschleissschichten an der radialen Nockenoberfläche modernste Verfahren anwendbar z.B. CVD-Verfahren (Carbon Vapour Deposition), Ionitrieren. Die Hartschichtdicke beträgt ca. 10µm. Je nach Verfahren muss dabei mit Temparaturen, von 300 - 550 °C gerechnet werden.

In gewissen Fällen kann es von Vorteil sein, anstelle einer harten Verschleissschicht eine Gleitschicht auf die radiale Stützschicht aufzubringen. Die Gleitschicht begünstigt das Einlaufen der Trieblingspartner zueinander und verhindert, dass einer der beiden Trieblingspartner vorzeitig zum Verschleiss neigt. Die Gleitschicht wird in der Regel durch eine chemische Nassbehandlung erzeugt, welche gegenüber dem Dünnhartschichtverfahren kostengünstiger ist. Die Schichtdicke beträgt ca. 10µm. Als Gleitschicht kommt z.B. eine Manganphosphatschicht zum Einsatz. Zusätzlich kann durch Nassbehandlung ein Molybdändisulphid, zB. Molykott in die Manganphosphatkristallstruktur eingelagert werden, was die Notlaufeigenschaften des gesamten Nockentriebes weiter verbessert.

Die Ausbildung gemäss Anspruch 6 ergibt eine extrem leichte Bauform.

Die Variante gemäss Anspruch 8 stellt eine Alternative zu jener nach Anspruch 4 dar, wenngleich auch Kombinationen denkbar wären. Sie verhindert vor allem Axialverschiebungen der Nocken optimal. Ihre Anwendung ergibt sich vorzugsweise bei Kleinserien.

Demgegenüber ist die Variante gemäss Anspruch 9 dann zu bevorzugen, wenn der Nockenkörper aus niedrig gekohltem Stahl (<C-Gehalt 0,3%) besteht, und grosse Serien hergestellt werden müssen. Eine umlaufende oder in Segmente aufgeteilte Schweissnaht ist dabei möglich: Die Schweiss-Parameter des Schweissverfahrens werden so geführt, dass Materialspritzer sowie bleibende Deformation durch die auftretende örtliche Erwärmung vermieden werden.

Das Verfahren gemäss Anspruch 10 verhindert unnötigen Materialverbrauch und eine unnötige Versteifung von Zonen, die relativ elastisch bleiben müssen.

Bei der Montage ist grundsätzlich zu beachten: Nachdem die Nocken und die Welle auf Fertigmass bereit gestellt, die Nocken auch mit entsprechender Hartschicht oder Gleitschicht behandelt sind, werden die Nocken entsprechend ihrer Winkel- und Achsposition, einzeln nacheinander auf die Welle geschoben. Wird eine Erhöhung des Haltedrehmomentes über das durch die gewählte spielfreie Übergangspassung erzeugte Haltedrehmoment gewünscht, erfolgt eine zusätzliche torsional/axial wirkende Befestigung der Nocken an der Welle in einer weiteren Operation. Um den verschiedensten Anforderungen, welche an einen Nockentrieb (Gleit- oder Rolltrieb) gestellt werden, gerecht zu werden, sind im Rahmen der Erfindung die verschiedensten torsionalen / axialen Befestigungen möglich, jedoch nur drei näher herausgestellt. Sie kommen, in Abhängigkeit von Nockendimensionen und deren Haftsitzzonen, Ausbildung des Kragens des Nockens, sowie des verwendeten Werkstoffes des Nockens zur Anwendung.

Nachdem eine der Befestigungsarten ausgeführt ist, erfolgt in einer weiteren Operation das Komplettieren der Nockenwelle, indem allfällige Endstücke auf Endzapfen der Welle oder direkt auf die Welle in der Regel aufgepresst werden. Auch diese Endstücke sind auf Fertigmass von der Montage hergestellt. In einer weiteren Operation kann, wenn nötig, eine Kontrolloperation angehängt werden. Die gesamte Montage der Nockenwelle erfolgt auf einer Montagelinie. Wenn die Nockenwellen die Montagelinie verlassen, sind diese ohne zusätzliche Bearbeitung einbaubereit.

Weitere Einzelheiten der Erfindung ergeben sich anhand der nachfolgenden Beschreibung von in der Zeichnung schematisch dargestellten Ausführungsbeispielen. Es zeigen:
- Fig.1: eine erfindungsgemäss ausgebildete Nockenwelle in Ansicht, in zusammengebautem Zustand in 2 Versionen, wovon die linke Seite Nocken mit Kragen trägt, von der
- Fig.2: eine Ansicht des Zylinderkörpers, mit eingepressten Endstücken, jedoch ohne Nocken, wobei die linke Seite Gruppen von Längsnuten zeigt;
- Fig.3-5: je einen Schnitt nach der Linie III - III der Fig.1 mit unterschiedlichen Befestigungsarten sowie
- Fig.3a-5a: je einen Längsschnitt nach der Linie III.a - III.a bis V.a - V.a der jeweiligen Fig.3 bis 5;
- Fig.6-9: je einen vergrösserten Ausschnitt des Axialschnitts Nocke / hohle Welle der verschiedenen Übergangspassungen;
- Fig.10-12: eine vorteilhafte Ausführung eines erfindungsgemäss vorgenommenen Verfahrensschrittes, und zwar Fig.10 und 12 bei einem vergrösserten Ausschnitt von Fig.3a und Fig.11 als Schnitt nach der Linie XI - XI und
- Fig.13: auf einem Spanndorn paketweise aufgespannte Nocken.

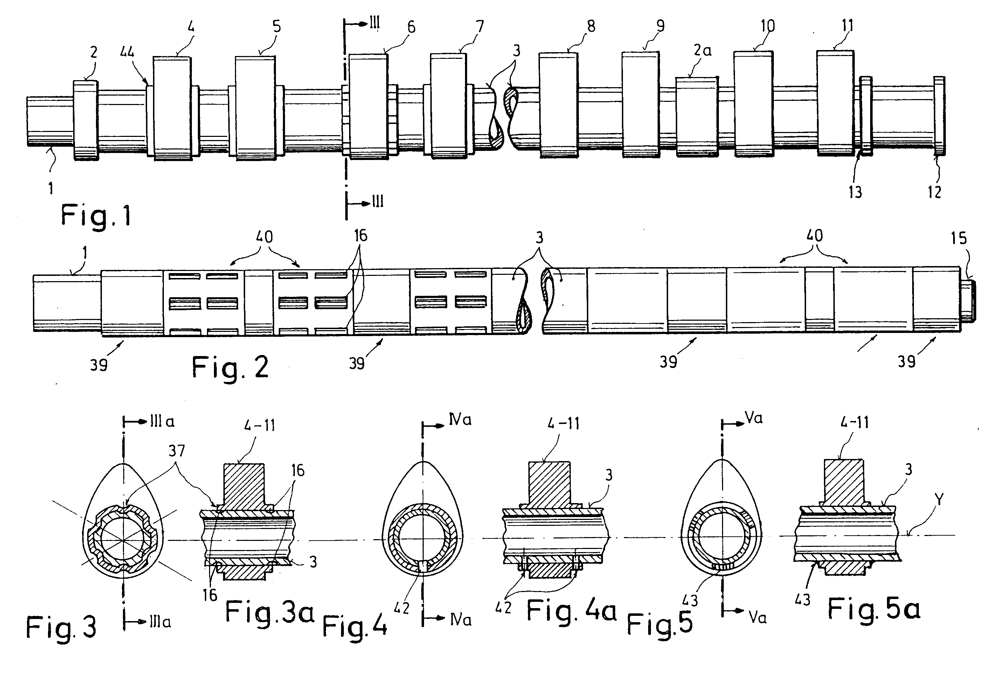

Gemäss Fig.1 und 2 weist eine als Nockenwelle dienende, vorzugsweise hohle Welle zwei Endstücke 1 und 15 auf, die in ihre hohlen Enden eingepresst sind. Dort sind auch Lager-, Begrenzungs- bzw. Distanzringe 2, 2a, 12, 13 vorgesehen, die auf dem jeweiligen Endstück 1, 15 bzw. auf der Welle 3 in beliebiger, an sich bekannter Weise - meist aufgepresst - montiert sind.

Auf der Welle 3 sind in entsprechenden Abständen die Welle 3 ringartig umgebende Nocken 4 bis 11 und allenfalls auch noch Distanzringe 13 angebracht.

Die Welle 3 (Fig.2) weist entlang ihrer Längsachse Zonen mit unterschiedlichem Durchmesser auf. Die Zonen (39) stellen Lagerstellen der Nockenwelle dar und die Zonen (40) sind jene, auf denen die Nocken sitzen. Die Zonen (40) sind zu den Zonen (39) erhaben ausgeführt, um beim Aufschieben der Nocken eine Beschädigung, z.B. durch Anfressen, zu vermeiden. Um eine rationelle Herstellung der Welle (3) durch Einstichcenterlessschleifen zu erreichen, ist es notwendig, die über den grössten Abmessungen der Welle 3 liegenden Partien - in diesem Falle Zonen (40) - vgl. Fig.1: Dichtring (2), Längsbegrenzung (12,13), Zwischenring (2a), also die Kernstruktur von der Welle zu trennen und als lose Teile auf Mass fertigzustellen, und diese am Schluss der Montage - in der Regel durch Aufpressen - hinzuzufügen.

Die Welle 3 ist nach dem Einstichcenterlessschleifen montagebereit und bedarf nach der Montage als gebaute Nockenwelle keiner Bearbeitung mehr. Dies gilt insbesondere für die Ausführungen nach den Ansprüchen 4, 8, 9, wobei für die Variante nach Anspruch 4 jedoch vor dem Einstichcenterlessschleifen die die Verbindung sichernden Längsnuten (16), wie diese in der Fig.2 angedeutet sind, einzubringen sind. Das Einbringen der Nuten 16 erfolgt z.B. auf einem Fräsrundtaktautomaten, durch Einstechfräsen, d.h. mit einem Scheiben- oder Nut-Fräser. Erfindungsgemäss sind beide axiale Enden der Nut 16 durch einen sphärischen Nutengrund 22 begrenzt, welcher notwendig ist, um die axiale Abstützung (Begrenzung) nach dem Sicken des Kragens 19 des jeweiligen Nockens zu gewährleisten.

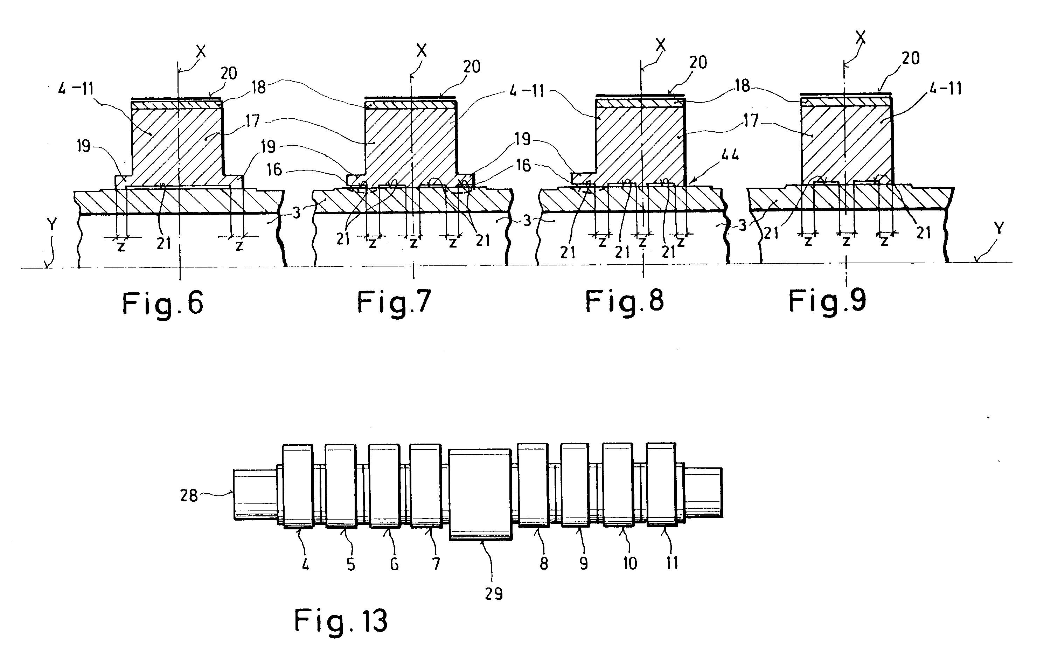

Die Fig.6-9 zeigen je einen Nocken 4-11 im Längsschnitt durch Nockenerhebung, Nockenbohrung und Welle 3 bis zu dessen Zentrumsachse Y. Die Linie X stellt in bezug auf die Nockenbreite eine Symmetrieachse dar.

Bei einem Gleittrieb werden an die Nocke hohe geometrische Anforderungen gestellt, z.B. muss die Nockenkurve absolut eben und parallel zur Achse sein, d.h. der anliegende Stösselboden muss auf der gesamten Breite des Nockens als Linienberührung (keine Wellenlinie) aufliegen. Entsprechend den Anforderungen eines gewählten Nockentriebes sind die Nocken und deren Verbindungszonen Z mit der Welle 3 entsprechend dimensioniert auszulegen.

Die dimensionelle Auslegung wird auch beeinflusst durch die Werkstoffwahl, wie auch die zu wählende fixierende Verbindung des Kragens.

Die Ausbildung des Nockens wird in den Fig.6-9 dargestellt. Die Nocken 4-11 sitzen mit einer spielfreien Uebergangspassung auf der Welle 3 ohne Darstellung der zusätzlich fixierenden Verbindungen. Der ringartige Nockenkörper mit der Nockenerhebung weist an der Stirnseite einen umlaufenden Kragen 19 auf (Fig.6 und 7) beidseitig und (Fig.8) einseitig. Fig.9 zeigt einen Nocken ohne umlaufenden Kragen. Der innere Kern 17 des Nockens inklusive Kragen 19 besteht aus zähem im Bereich des Kragens plastisch umformbarem Werkstoff, weist eine harte Stützschicht 18 und für Gleittriebe eine harte Verschleissschicht oder Gleitschichtzone 20 auf.

Beispielhaft können folgende Werkstoffe eingesetzt werden: legierte und unlegierte Einsatz-Vergütungs-Stähle, Nitrierstähle, Sinterwerkstoffe und Gusseisen. Durch eine geeignete thermische Behandlung, je nach Werkstoffwahl, wird eine genügend harte wie auch dicke Stützschicht 18 gebildet, z.B. durch Einsatzhärten, Carbonitrieren, Induktionshärten, Ionitrieren. Die Verschleissschicht 20 entsteht beispielhaft durch Verfahren wie: CVD-Beschichtung, Ionitrieren oder, sofern eine Gleitschichtzone ausreichend ist, ist diese kostengünstiger als eine Hartschicht z.B. durch reine Manganphosphatierung oder zusätzliche Molybdäneinlagerung in die Trägerschicht.

Erfindungsgemäss ist es auch möglich, für die Nocken 4-11 Leichtbauwerkstoffe anstelle von Stahlwerkstoffen einzusetzen. Dies erscheint dann bei Gleittrieben sinnvoll, wenn es gelingt, die Belastung auf den Nocken, z.B. durch Reduzierung der Ventiltriebmasse erheblich zu vermindern, wodurch es möglich wird, geringe Flächenpressungen zwischen den Trieblingspartner zu erreichen, welche den Einsatz z.B. von legierten vergüteten Alu-Werkstoffen ermöglichen. In Kombination mit einer Hohlwolle anstelle einer Gussnockenwelle, kann das Gewicht für eine gebaute NW um mehr als 50% reduziert werden. Bei Alu-Legierungen entfällt die Stützschicht 18, jedoch muss eine Verschleissschichtbeschichtung erfolgen, z.B. eine CVD-Beschichtung.

Erfindungsgemäss kommt der Ausbildung respektive der Gestaltung der Bohrung des ringförmigen Körpers 4-11 eine erhebliche Bedeutung zu. Es muss ein spielfreier Sitz des Nockens 4-11 mit der Welle 3 gegeben sein. Es dürfen keine unzulässigen Rundlauffehler von der Bohrungssitzzone Z zur radialen Nockenkurve auftreten, keine Spannungen, welche eine Verzerrung der Kurvenfläche in Achsrichtung, d.h. eine Beeinträchtigung der Ebenheit ergeben. Dies ist besonders wichtig bei Gleittrieben. Ein Anfressen der Welle im Bereich der Lagerstellen 39 wird vermieden, die zusätzlich fixierende Befestigung ist gegeben und die Montage des Nockens 4-11 auf der Welle 3 ist ohne Nachbearbeitung der montierten Nockenwelle gesichert.

Die Fig.6 zeigt eine Ausführung, welche den vorgegebenen Anforderungen gerecht wird. Der ringartige Nockenkörper hat beidseitig an seinen Stirnseiten vorstehende umlaufende Krägen 19. Um einerseits eine gute Standfläche (Führung) zu gewährleisten, sind die Festsitzzonen Z im Bereich der Kragen angebracht; möglichst am äussersten Rand. Anderseits können dadurch die auftretenden geometrischen Deformationen, bedingt durch die Durchmesserdifferenzen von Nockenbohrung und Aussendurchmesser der Welle 3 aufgenommen werden, eine maximale Überdeckung von 6/100 mm aufweisen, so dass keine dimensionellen Veränderungen der Nockenkurve auftreten. Um Spannungen im Nockenkern zu vermeiden, aber auch um die Aufschiebekräfte in Grenzen zu halten, ist die Bohrung freigestellt, d.h. es ergibt sich eine Zone 21, in welcher die Welle den Nocken nicht berührt.

Eine Gemeinsamkeit besteht bei den Fig.7-9 bei der Anordnung der Sitzzonen Z in der Nockenbohrung. Die je pro Stirnseite in der Bohrung befindliche Zone Z liegt mit ihrer äusseren Begrenzung bündig mit der Stirnseite des Nockenkörpers. Die Verschiebung der Sitzzonen Z gegen die Symmetrielinie X bewirkt bei gleicher Überdeckung von Bohrung / Aussendurchmesser wie bei Fig.6 eine bedeutend höhere Radialspannung der Fügepartner in den Berührungszonen, herrührend durch die dickere Wandung des Nockens als beispielsweise beim Kragen 19 gemäss Fig. 6. Hinzu kommt, dass die harte Stützschicht wie eine Armierung wirkt. Um nun die Aufschiebekräfte, die Radialspannungen und ein allfälliges Anfressen der beiden Fügepartner zu verhindern, muss die geometrische maximale Überdeckung der Fügepartner um ca. 25% eingeschränkt werden. Die Toleranzklasse muss von 7 gegen 6 verfeinert werden. Mit dieser Lösung muss mit dimensionellen Massänderungen nach der Montage bei der Nockenkurve gerechnet werden. Im Bereich zwischen den Nockenerhebungen wächst der Durchmesser etwa um die halbe gegebene Überdeckung, z.B. Überdeckung 4/100 wächst der Aussendurchmesser der Nockenkurve um ca. 2/100, was jedoch bei diesem Beispiel innerhalb der Toleranz liegt.

Dies ist in der Regel zulässig, wobei dieser Durchmesservergrösserung beim Nockenschleifen entgegengearbeitet werden kann. Ein Nachteil dieser Ausführung liegt darin, dass im Nockenaussendurchmesserbereich im Umfang bis zum Beginn der Nockenerhebung die Ebenheit in der Achsrichtung nicht gegeben ist, d.h. dass die Nockenlinie im Bereich der Symmetrielinie X Unebenheiten aufweist z.B. ist die Oberfläche dort konkav (z.B. bei dünnen Wandungen).

Um dieses Einsacken weitgehend zu eliminieren, kann um die Symmetrielinie eine zusätzliche Sitzzone Z vorgesehen werden.

Die berührungslosen Zonen 21 in der Bohrung befinden sich in der Kragenzone, wie auch in der ringartigen Nockenkurvenpartie. Diese Ausführung eignet sich besonders für Rollentriebe. Hier ist keine absolute Ebenheit der Nockenkurve in Achsrichtung gefordert, da die anliegende Rolle im Bereich der Symmetrielinie X ohnedies konvex ausgelegt ist.

Ein Vorteil bei der Ausführung nach Fig.7 ist dadurch gegeben, dass die auftretende höhere Radialspannung die Verschiebe- und Verdrehsicherung zwischen den Fügepartnern vergrössert und daher an die zusätzlich fixierende Verbindung kleinere Anforderungen gestellt sind. Diese Möglichkeit wird bei der Ausführung gemäss Fig.8 genutzt. Es genügt, dass die Nocken nur einen umlaufenden Kragen 19 aufweisen, um - sofern nötig - die zusätzlich fixierende Verbindung z.B. lt. Anspruch 4 zu gewährleisten. Durch die Anbringung nur eines Kragens 19 ergeben sich günstigere Herstellkosten pro Nocken und an der Welle 3 wird pro Nocken nur eine Nutreihe 16 benötigt.

Eine Variante stellt die Ausführung gemäss Fig.9 dar. In der Stirnseite des ringförmigen Nockenkörpers 4-11 befindet sich kein vorstehender umlaufender Kragen 19. Die Nockenbohrung entspricht jedoch der Ausführung wie Fig.7 und 8. Die gewünschtenfalls zusätzlich fixierende Verbindung ist nur mit den Merkmalen laut Anspruch 9,d.h., insbesondere mittels Laserschweissung durchzuführen. Um eine rissfreie Schweissung zu garantieren, können nur kohlenstoffarme Werkstoffe verwendet werden, d.h. der C-Gehalt sollte < 0,3% sein (Einsatzstähle).

Die Herstellung des Nockens erfolgt durch bekannte Verfahren. Die Rohlingherstellung erfolgt z.B. durch Anwendung der Verfahren: Warmfliesspressen, Halbwarmfliesspressen, bei Werkstoffen mit niedrigem C-Gehalt durch Kaltfliesspressen, sofern geeignete Werkstoffe zur Verfügung stehen auch durch Sinterverfahren, Sinterschmieden. Die notwendige Nachbearbeitung der Nockenrohlinge, insbesondere der Bohrung und Kragenpartie, wird auf bekannten Drehautomaten ausgeführt, wobei es von Vorteil ist, den Nocken an seiner Aussenkontur zu spannen, um enge Mittenversatztoleranzen zu erhalten.

Wird die Stützschicht 18, z.B. durch Einsatz- oder Induktions-Härten gebildet, muss diese Operation vor der Endmassbearbeitung der Passungsbohrung ausgeführt werden.

Anschliessend werden die Nocken auf einer Nockenschleifmaschine formgeschliffen. Das hier vorgeschlagene Fügeverfahren nach Anspruch 1 erlaubt erstmals eine paketweise Schleifbearbeitung der Nockenkurve. Zu diesem Zweck werden die Nocken 4-11 gleichmässig ausgerichtet und auf einen gemeinsamen hydraulischen Spanndorn Fig.13 gespannt. Um die Wirtschaftlichkeit weiter zu steigern, können die relativ hohen Nebenzeiten, welche sich beim Dornwechsel inkl. Nockenpositionierung ergeben, sogar diese zu halbieren, ist es zweckmässig, den Dehnspanndorn 28 doppelseitig auszulegen, was jedoch bedingt, dass dieser in seiner Mitte eine Abstützung 29 erhält. Das Nockenschleifen kann damit im Pendelverfahren erfolgen. Je nach Breite der Nocken inkl. allfällig vorhandenen Kragen 19 können pro Dornseite z.B. 4-8 Nocken, d.h. 8-16 Nocken in einer Aufspannung geschliffen werden. Dieses erst durch das Fügeverfahren ermöglichte Paketschleifen erbringt eine gewichtige Herabsetzung der Bearbeitungszeiten und damit der Herstellkosten, sowie massive Einsparungen an Investitionen bei den speziellen Nockenschleifmaschinen. Erfindungsbedingt ist nur mehr ca. ein Achtel der bisher erforderlichen Investitionen nötig.

Nachdem die Nocken 4-11 auf ihr Endmass geschliffen sind, werden sie - sofern notwendig - auf dem gleichen hydraulischen Dehnspanndorn 28 einer Microfinishbearbeitung unterzogen. Anschliessend erfolgt, sofern notwending, das Aufbringen der harten Verschleissschicht oder der Gleitschicht. Die Nocken 4-11 können nun auf die Welle 3 positionsgerecht aufgeschoben werden, wie bereits erwähnt.

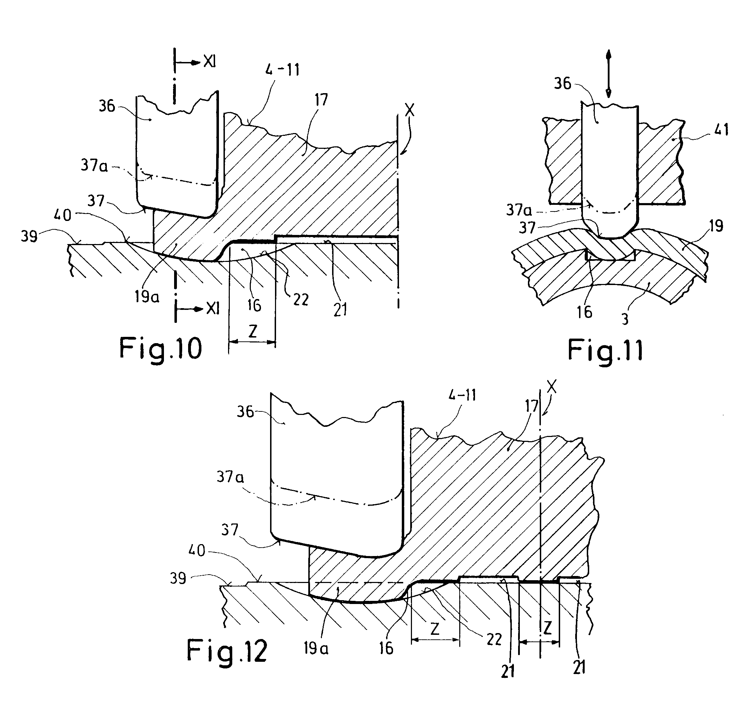

In einer zweiten Operation erfolgt, sofern gewünscht, die zusätzlich fixierende Verbindung der Nocken 4-7 mit der Welle 3. Beispielhaft stehen für die zusätzlich fixierende Verbindung drei erfinderische Varianten zur Verfügung, wie dies in den Fig.3, 3a; 4. 4a; 5, 5a dargestellt ist. Eine bevorzugte fixierende Verbindung zeigen Fig.3, 3a, eine Vergrösserung davon Fig.10 und 11.

Um die Nocken 4-7 zusätzlich radial unverdrehbarer und axial unverschieblicher mit der Welle 3 zu verbinden weist diese - gemäss Fig.2 und 3a eine Anzahl von über den Umfang der Welle 3 verteilten Gruppen trogförmiger Nuten 16 auf. Der Nutengrund 22 (Fig.10) wird durch einen Kreisbogen gebildet. Die Anzahl der Nuten, welche in einer Ebene radial am Umfang der Welle eingebracht werden, soll mindestens drei Nuten betragen. Eine gerade Anzahl von Nuten ermöglicht das gegenüberliegende gleichzeitige Sicken 37 in einem Werkzug, sodass die radial wirkenden Kräfte, welche durch die Verformung des Kragens eintreten, aufgefangen werden.

Anhand der Fig.10 und 11 soll die Verbindung erläutert werden. Fig.10 zeigt einen Längsschnitt eines in einer ersten Operation auf die Welle 3 aufgeschobenen Nockens 4-11, mit 2 Kragen, Nockenbohrung gemäss Fig.6, (nur eine Hälfte dargestellt), welcher in die geforderte Winkel- und Längsposition gebracht ist. Der Kragen 19, des nun in seiner Lage positionierten Nockens, wird in einer zweiten Operation in die Nuten 16 eingesickt, wie dies in Fig.10 und 11 verdeutlicht ist, und damit radial und axial unlösbar zusammengefügt.

Die Fig.10 zeigt im weiteren die eingesickte Kragenzone 19a, den Sickenstempel 36 und die Stellung 37a vor dem Sicken. Fig.11 zeigt einen Schnitt durch Fig.10. Der Stempel 36 ist in einem Werkzeughalter aufgenommen, wie mit der Kontur 41 angedeutet. Der Stempel ist in Achsrichtung V-förmig ausgebildet; seine Schräge berücksichtigt in der Formauslegung die Nutenbreite der Nut 16, wie auch die sich beim Einsicken ergebende, doppelte Wandstärke des Kragens 19.

Fig.12 entspricht weitgehend der Fig.10. Die Abweichung ist dadurch gegeben, dass die Darstellung einen Nocken zeigt mit einem umlaufenden Kragen 19a und die Nockenbohrung jener nach Fig. 8 entspricht. Um gewünschtenfalls eine zusätzliche axiale Unverschieblichkeit des Nockens mit einem Kragen zu erreichen, ist es notwendig, die Kragenlänge ca. 50% zu verlängern und den Mittelpunkt des begrenzenden Kreisbogens (Nutengrund 22) etwa in die Mitte der Kragenlänge zu tragen. Hinzugefügt sind die Festsitzzonen Z entsprechend Fig.8 inklusive Freistellung 21.

Sicken gemäss (Fig.10-12) erreicht man, indem mit einem Stempel 36 das Material des Kragens 19 in die unter dem Stempel liegende Nut 16 der Welle 3 gedrückt wird, der Kragen sich somit in die Nut einformt, so weit, bis das Kragenmaterial am kreisförmigen Nutengrund 22 und an den Nutseiten spielfrei anliegt. Die auftretenden radialen Kräfte, welche beim Umformen des Kragens 19 entstehen und auf die Welle 3 einwirken, könnten eine bleibende Deformation der Welle 3 bewirken. Um dies zu verhindern, werden die auftretenden Kräfte durch formschlüssige Halbschalen, welche direkt unter der Kragenpartie, wie auch partiell unter der Welle liegen, abgefangen.

Fig.3 und 3a zeigen eine Welle 3, auf der ein Nocken 4-11 montiert und fixierend befestigt ist. Kragen 19 und Bohrungsvarianten nach Fig.6-8 erlauben diese Verbindung.

Gemäss Fig.4, 4a ist dessen Kragen 19 durch einen Passstift 42 fixiert, der in eine Bohrung in der Welle 3 eingepresst ist. Aus Sicherheitsgründen sollten 2 Passstifte vorgesehen werden.

Fig.5 und 5a stellen eine weitere fixierende Befestigungsmöglichkeit dar, bei der die Schweissnaht 43 die Welle 3 verbindet. Kragen und Bohrungsvarianten sind dafür nach Fig.6 und 9 geeignet. Als Schweissverfahren kommen all jene in Frage, die mit einer möglichst geringen Wärmeeinwirkung auskommen und damit einen Verzug der Welle 3 ausschliessen., z.B. Laserschweissverfahren.

## Patentansprüche

1. Verbindung einer auf Fertigmass gefertigten Welle (3) mit mindestens einem auf Fertigmass gefertigten Nocken (4-11), der die Welle (3) ringartig umgibt, wobei die Innenbohrung (44) des Nockens (4-11) mindestens zwei axial voneinander getrennte ringförmige Zonen (Z) aufweist, die durch Freistellungen (21) in der Innenbohrung (44) von einander getrennt sind und symmetrisch zur radialen Mittelebene (X) des Nockens (4-11) liegen, dadurch gekennzeichnet, dass die zwei ringförmigen Zonen (Z) auf der Welle (3) eine spielfreie Übergangspassung ergeben, deren Überdeckungsgrad gross genug ist, um eine Verdreh- und Verschiebebefestigung des Nockens (4-11) auf der Welle (3) zu gewährleisten, wobei andererseits der Überdeckungsgrad klein genug ist, um beim Aufschieben des Nockens (4-11) keine nennenswerte Zerstörung an der Nockeninnenbohrung (44) oder an der Welle (3) zu bewirken.

2. Verbindung nach Anspruch 1, dadurch gekennzeichnet, dass der Nocken (4-11) mindestens einen axial vorstehenden Kragen (19) aufweist, der durch Befestigungsmittel (37,42,43) auf der Welle (3) gegen Verschiebung und Verdrehung gesichert ist, wobei die ringförmigen Zonen (Z) vorzugsweise am oder unmittelbar neben dem Kragenbereich liegen.

3. Verbindung nach Anspruch 1 oder 2, dadurch gekennzeichnet, dass die Welle (3) in ihrer Länge gegenüber Lagerstellen (39) erhabene Abschnitte (40) aufweist, auf denen die Nocken (4-11) angeordnet sind.

4. Verbindung nach einem der vorhergehenden Ansprüche, dadurch gekennzeichnet, dass an der Welle (3) in Axialrichtung nutförmige Vertiefungen (16) vorgesehen sind, in die von dem wenigstens einen Kragen (19) abragende, vorzugsweise als Sicken ausgebildete Vorsprünge (37) ragen.

5. Verbindung nach einem der vorhergehenden Ansprüche, dadurch gekennzeichnet, dass der Nocken (4-11) aus einem radial inneren Abschnitt (17) aus zähhartem, insbesondere plastisch verformbarem Material, und einem radial äusseren Abschnitt (18) aus hartem, insbesondere verschleissfestem, Material besteht.

6. Verbindung nach Anspruch 5, dadurch gekennzeichnet, dass der radial innere Abschnitt (17) aus legiertem, vergütetem Aluminium besteht und vorzugsweise eine Verschleissschicht (20) - z.B. eine CVD-Beschichtung - aufweist.

7. Verbindung nach einem der vorhergehenden Ansprüche, dadurch gekennzeichnet, dass der radial äussere Abschnitt (18) von einer auf dem radial inneren Abschnitt (17) durch Carbonitrieren, Einsatz- oder Induktions-Härten, Ionitrieren oder Gasnitrieren erzeugten Stütz-Schicht, und gegebenenfalls auf dem radial äusseren Abschnitt (18) einer Verschleissschicht (20) (z.B. CVD-Beschichtung) gebildet ist, oder vorzugsweise mit einer Gleitschicht, insbesondere mit einer Kupfer- oder einer - insbesondere Molybdändisulfid enthaltenden - Manganphosphatschicht versehen ist.

8. Verbindung nach einem der Ansprüche 2 bis 7, dadurch gekennzeichnet, dass wenigstens ein den Kragen (19) durchdringender Verbindungsbolzen (42) mit Presspassung in einer in der Welle (3) angeordneten Vertiefung (16) sitzt.

9. Verbindung nach einem der vorhergehenden Ansprüche, dadurch gekennzeichnet, dass der Nocken (4-11), insbesondere sein Kragen (19), auf der Welle (3) mittels eines höchstens geringfügige Spannungen erzeugenden Schweissverfahrens, insbesondere mittels Laserschweissen, befestigt ist.

10. Verfahren zum Herstellen eines radial äusseren Abschnittes nach Anspruch 7, durch Erzeugen einer harten, insbesondere verschleissfesten Schicht bzw. Beschichtung auf dem radial inneren Abschnitt (17), dadurch gekennzeichnet, dass die Innenbohrung (44) und der Kragen (19), gegebenenfalls auch die Seitenflächen des Nockens (4-11) während dieses Erzeugungsvorganges abgedeckt wird.

11. Verfahren zur Erzielung einer geringen Mittenversatztoleranz der Innenbohrung (44) eines Nockens (4-11) zur Nockenaussenkontur, wobei mehrere Nocken (4-11) gleichzeitig auf ein Fertigmass gefertigt werden, nach einem der vorhergehenden Ansprüche, dadurch gekennzeichnet, dass eine Mehrzahl von Nocken (4-11) mit gleicher Ausrichtung auf einen hydraulischen Dehnspanndorn (28) gesteckt und anschliessend gemeinsam durch Formschleifen und gegebenenfalls weiteres Mikrofinish bearbeitet werden.

## Claims

1. Connection of a shaft (3) finished to size to at least one cam (4-11) finished to size, which surrounds the shaft (3) in the form of a ring, the inner bore (44) of the cam (4-11) having at least two axially separated annular zones (Z) which are separated from one another by spaces (21) in the inner bore (44) and are symmetrical with respect to the radial central plane (X) of the cam (4-11), characterized in that the two annular zones (Z) result in a play-free transition fit on the shaft (3), the degree of overlap of which fit is sufficiently large to ensure nonrotational and nondisplaceable fastening of the cam (4-11) on the shaft (3), on the other hand the degree of overlap being sufficiently small for no significant destruction of the cam inner bore (44) or of the shaft (3) to be caused when the cam (4-11) is pushed on.

2. Connection according to Claim 1, characterized in that the cam (4-11) has at least one axially projecting collar (19) which is secured against displacement and rotation on the shaft (3) by fastening means (37, 42, 43), the annular zones (Z) preferably being in or directly adjacent to the collar region.

3. Connection according to Claim 1 or 2, characterized in that the shaft (3) has, along its length, sections (40) which are raised relative to bearing points (39) and on which the cams (4-11) are arranged.

4. Connection according to any of the preceding Claims, characterized in that the shaft (3) is provided in the axial direction with groove-like indentations (16) into which extend projections (37) projecting from the one or more collars (19) and preferably in the form of beads.

5. Connection according to any of the preceding Claims, characterized in that the cam (4-11) consists of a radially inner section (17) of tough, in particular plastically deformable material and a radially outer section (18) of hard, in particular hard-wearing, material.

6. Connection according to Claim 5, characterized in that the radially inner section (17) consists of alloyed, heat-treated aluminium and preferably has a hard-wearing layer (20), for example a coating applied by CVD.

7. Connection according to any of the preceding Claims, characterized in that the radially outer section (18) is formed by a support layer produced on the radially inner section (17) by carbonitriding, case hardening or induction hardening, ionitriding or gas nitriding, and optionally on the radially outer section (18) of a hard-wearing layer (20) (for example a coating applied by CVD), or is preferably provided with a sliding layer, in particular with a copper or a manganese phosphate layer - in particular containing molybdenum disulphide.

8. Connection according to any of Claims 2 to 7, characterized in that at least one connecting pin (42) passing through the collar (19) has a press fit in an indentation (16) arranged in the shaft (3).

9. Connection according to any of the preceding Claims, characterized in that the cam (4-11), in particular its collar (19), is fastened on the shaft (3) by means of a welding process which generates at most low voltages, in particular by means of laser welding.

10. Process for the production of a radially outer section according to Claim 7 by producing a hard, in particular hard-wearing layer or coating on the radially inner section (17), characterized in that the inner bore (44) and the collar (19), optionally also the lateral surfaces of the cam (4-11), are covered during this production process.

11. Process for achieving a small mismatch tolerance of the inner bore (44) of a cam (4-11) relative to the outer contour of the cam, several cams (4-11) being simultaneously finished to size, according to one of the preceding Claims, characterized in that a plurality of cams (4-11) are pushed with the same orientation onto a hydraulic extending clamping spindle (28) and are then machined together by profile grinding and optionally further microfinishing.

## Revendications

1. Liaison d'un arbre (3) usiné à la cote finale, comportant au moins une came (4 à 11), usinée à la cote finale, entourant de façon annulaire l'arbre (3), le perçage intérieur (44) de la came (4 à 11) présentant au moins deux zones (Z) annulaires, séparées axialement l'une de l'autre, la séparation l'une de l'autre s'effectuant au moyen de parties dégagées (21) ménagées dans le passage intérieur (44), et situées symétriquement par rapport au plan médian radial (X) de la came (4 à 11), caractérisée en ce que les deux zones (Z) annulaires donnent sur l'arbre (3) un ajustement de transition, sans jeu, dont le degré de recouvrement est suffisamment grand pour assurer une fixation d'assujettissement en rotation et en coulissement de la came (4 à 11) sur l'arbre (3), le degré de recouvrement étant, d'autre part, suffisamment petit, pour ne provoquer aucune destruction notable sur le perçage intérieur de came (44) ou sur l'arbre (3), lors de l'enfilage de la came (4 à 11).

2. Liaison selon la revendication 1, caractérisée en ce que la came (4 à 11) présente au moins une collerette (19) faisant saillie axialement, fixée pour empêcher tout coulissement et toute rotation sur l'arbre (3), à l'aide de moyens de fixation (37, 42, 43), les zones annulaires (Z) étant situées de préférence sur, ou directement à côté de, la zone de collerette.

3. Liaison selon la revendication 1 ou 2, caractérisée en ce que l'arbre (3) présente dans sa longueur des tronçons (40), en relief par rapport au point de tourillonnement (39), sur lesquels sont disposées les cames (4 à 11).

4. Liaison selon l'une des revendications précédentes, caractérisée en ce que des creusements (16) en forme de gorges sont prévus en direction axiale sur l'arbre (3), creusements dans lesquels pénètrent des saillies (37) réalisées, de préférence, sous forme de moulures et se projetant depuis la, au moins, une collerette (19).

5. Liaison selon l'une des revendications précédentes, caractérisée en ce que la came (4 à 11) est composée d'une section (17) radialement intérieure, en un matériau tenace, en particulier déformable plastiquement, et d'une section (18) radialement extérieure, en un matériau dur, en particulier en un matériau résistant à l'usure.

6. Liaison selon la revendication 5, caractérisée en ce que la section (17) radialement intérieure est composée en un alliage d'aluminium, en particulier d'un aluminium traité, et présente, de préférence, une couche d'usure (20) - par exemple une couche appliquée par procédé CVD (Carbon Vapour Deposition).

7. Liaison selon l'une des revendications précédentes, caractérisée en ce que la section (18) radialement extérieure est constituée par une couche de protection produite sur la section (17) radialement intérieure, par carbonitruration, cémentation ou trempe par induction, nitruration par échange d'ions ou nitruration en phase gazeuse, et, le cas échéant, sur la section (18) radialement extérieure d'une couche d'usure (20) (par exemple revêtement par procédé CVD), ou, de préférence, avec une couche de glissement, en particulier avec une couche de cuivre ou une couche de phosphate de manganèse - contenant en particulier du bisulfure de molybdène.

8. Liaison selon l'une des revendications 2 à 7, caractérisée en ce qu'au moins un boulon de liaison (42) traversant la collerette (18) est placé avec ajustement serré dans une cavité (16), réalisée dans l'arbre (3).

9. Liaison selon l'une des revendications précédentes, caractérisée en ce que la came (4 à 11), en particulier sa collerette (19), est fixée sur l'arbre (3) au moyen d'un procédé de soudage produisant des tensions-contraintes de durées extrêmement brèves, en particulier au moyen de soudages au laser.

10. Procédé de fabrication d'une section radiale extérieure selon la revendication 7, par production d'une couche dure, en particulier résistante à l'usure, respectivement d'un revêtement sur la section radialement intérieure (17), caractérisé en ce que le perçage intérieur (44) et la collerette (19), le cas échéant également les faces latérales de la came (4 à 11), sont recouverts pendant ce processus de production.

11. Procédé d'obtention d'une faible tolérance d'excentration entre le perçage intérieur (44) d'une came (4 à 11) et le contour extérieur de la came, plusieurs cames (4 à 11) étant fabriquées simultanément à la cote finale, selon l'une des revendications précédentes, caractérisé en ce qu'une pluralité de cames (4 à 11), ayant une orientation identique, sont enfichées sur un mandrin de serrage extensible (28) hydraulique, puis usinées conjointement, par rectification du contour à la forme et, le cas échéant, soumises subséquemment à une micro-finition.
